**Europäisches Patentamt**

**European Patent Office**

**Office européen des brevets**

(11) Veröffentlichungsnummer : **0 269 649 B1**

(12) **EUROPÄISCHE PATENTSCHRIFT**

(45) Veröffentlichungstag der Patentschrift :
**27.11.91 Patentblatt 91/48**

(51) Int. Cl.$^5$ : **H02K 41/03**

(21) Anmeldenummer : **87902430.5**

(22) Anmeldetag : **08.05.87**

(86) Internationale Anmeldenummer :
**PCT/DE87/00213**

(87) Internationale Veröffentlichungsnummer :
**WO 87/07454 03.12.87 Gazette 87/27**

(54) **LINEAREINHEIT FÜR HANDHABUNGSGERÄTE.**

(30) Priorität : **30.05.86 DE 8614673 U**

(43) Veröffentlichungstag der Anmeldung :
**08.06.88 Patentblatt 88/23**

(45) Bekanntmachung des Hinweises auf die
Patenterteilung :
**27.11.91 Patentblatt 91/48**

(84) Benannte Vertragsstaaten :
**CH DE FR GB IT LI**

(56) Entgegenhaltungen :
**DE-A- 3 537 728**
**FR-A- 2 267 690**
**US-A- 3 954 037**
**US-A- 4 377 761**
**Patent Abstracts of Japan, vol. 8, no. 25**
**(E-225) (1462), 2 February 1984, & JP, A,**
**58186362**

(73) Patentinhaber : **ROBERT BOSCH GMBH**
**Postfach 50**
**W-7000 Stuttgart 1 (DE)**

(72) Erfinder : **CLAUSS, Heinz**
**Nittelwaldstr. 30**
**W-7000 Stuttgart 1 (DE)**
Erfinder : **DREXEL, Peter**
**Plieninger Str. 33**
**W-7031 Steinenbronn (DE)**
Erfinder : **GOSDOWSKI, Gerhard**
**Camberlystr. 83**
**W-7120 Bietigheim-Bissingen (DE)**
Erfinder : **KETTNER, Andreas**
**Zorndorferstr. 8**
**W-7000 Stuttgart 31 (DE)**
Erfinder : **LEISNER, Ernst**
**Wettertalstr. 4**
**W-7257 Ditzingen (DE)**
Erfinder : **SCHWARZE, Udo**
**Bauernstr. 97**
**W-7257 Ditzingen (DE)**

## Beschreibung

### Stand der Technik

Die Erfindung geht aus von einer Lineareinheit nach der Gattung des Hauptanspruchs. Solche Einheiten eignen sich beispielsweise dazu, einen Gegenstand zu ergreifen und mit Hilfe elektromagnetischer Stellantriebe in einer oder mehreren vorgegebenen Richtungen um bestimmte, zuvor eingegebene Beträge zu verschieben. Da die Verschiebegeschwindigkeiten vergleicheweise hoch sind, ist es erforderlich, die Masse des beweglichen Werkzeugträgers der Einheit und des mit ihm verbundenen Läufers des Linearmotors möglichst klein zu halten, damit deren Bewegungen prompt und wirksam gedämpft werden können. So läßt sich sicherstellen, daß der Träger auch tatsächlich auch an dem Punkt angehalten wird, an dem die Stillsetzung gefordert wird. Es werden deshalb zur Herstellung der Werkzeugträger Werkstoffe oder Werkstoffkombinationen verwendet, welcher der Forderung nach möglichst geringer Masse, großer Steifigkeit und Verschleißfestigkeit gerecht werden. Als besonders geeignet haben sich im Strangpreßverfahren hergestellte Hohlprofile aus Aluminium oder einem Verbund aus Aluminium und Stahl erwiesen, wobei der Grundkörper aus Aluminium und die Lagerflächen aus Stahlbändern bestehen.

Elektromagnetisch betriebene Linearmotoren mit einer Zahnstange aus magnetisch leitendem Material als Motorläufer und einem magnetisierbaren Motorständer sind in großer Zahl bekannt. Ein solcher Motor ist beispielsweise in der DE-OS 22 47 509 beschrieben. Das bewegliche Element des Motors besteht aus einem massiven, magnetischen Stab, der runden oder rechteckigen Querschnitt haben kann und an seiner Außenfläche mit einer oder mehreren Zahnreihen gleicher Teilung versehen ist. Gegenüber jeder Zahnreihe liegen mehrere, mit Wicklungen versehene Polmassen, die gleichfalls je eine Verzahnung aufweisen. Die einander zugekehrten Flächen der Zahnreihen liegen in zwei parallelen Ebenen mit einem Zwischenraum, der den Polspalt bildet. Der das bewegliche Element bildende Stab darf prinzipbedingt nur so stark gemacht werden, daß ihn die magnetischen Feldlinien ohne Schwierigkeiten zu durchdringen vermögen.

Es wäre naheliegend, den öekannten oder einen ähnlich aufgebauten Linearmotor einfach an den Halter des Werkzeugträgers anzubauen und seine Zahnstange mit dem Werkstückträger derart zu verbinden, daß die Zahnstange das treibende Element und der Werkzeugträger das angetriebene Element ist. Eine solche Lösung wäre insofern aufwendig als sowohl die Zahnstange als auch der Werkzeugträger eine eigene Präzisionslagerung benötigten und die Lineareinheit insgesamt ein großes Volumen hätte.

### Vorteile der Erfindung

Die erfindungsgemäße Lineareinheit mit dem kennzeichnenden Merkmal des Hauptanspruchs hat demgegenüber den Vorteil, daß eine gesondert gelagerte Zahnstange als Motorläufer zum Antrieb des Werkzeugträgers entfällt. Der Werkzeugträger bildet zugleich die Zahnstange des Linearmotors, so daß letzterer vollständig in die aus Werkzeugträger und Halter bestehende Baugruppe integriert werden kann. Dies ermöglicht einen teile- sowie raumsparenden Aufbau der Lineareinheit, wobei für den Werkzeugträger nach wie vor Profile und Werkstoffe verwendet werden können, welche eine geringe Masse sowie eine große Steifigkeit und Verschleißfestigkeit aufweisen.

Durch die in den Unteransprachen aufgefahrten Maßnahmen sind vorteilhafte Weiterbildungen und Verbesserungen der im Hauptanspruch angegebenen Lineareinheit möglich. Bei Werkzeugträgern, die aus einem nichtmagnetischen Werkstoff hergestellt sind ist es vorteilhaft, die Verzahnung als senkrecht zur Bewegungsrichtung des Werkzeugträgers verlaufende Stege in einem Band aus magnetisch leitendem Material auszubilden, welches am Außenumfang des Werkzeugträgers befestigt, vorzugsweise aufgeklebt ist. Besteht der Werkzeugträger hingegen aus einem magnetischen Werkstoff, so ist es zweckmäßig, die Verzahnung durch Fräsen oder Sägen des Trägers in Querrichtung zu bilden. Um die Motorkraft bei gleicher Baulänge zu erhöhen ist ferner vorgesehen, daß der Werkzeugträger mehrere, aber seinen Umfang verteilte Verzahnungen hat, denen je ein im Halter des Trägers untergebrachter Motorständer zugeordnet ist.

### Zeichnung

Ausführungsbeispiele der Erfindung sind in der Zeichnung dargestellt und in der nachfolgenden Beschreibung näher erläutert. Es zeigen Figur 1 eine Lineareinheit für Handhabungsgeräte im Querschnitt, Figur 2 einen Teil des Werkzeugträgers mit einer daran angebrachten Zahnstange des Linearmotors in perspektivischer Darstellung, Figur 3 den Werkzeugträger mit Linearmotor in einer teilweise geschnittenen Seitenansicht, Figur 4 ein weiteres Ausführungsbeispiel einer Lineareinheit im Querschnitt.

### Beschreibung der Ausführungsbeispiele

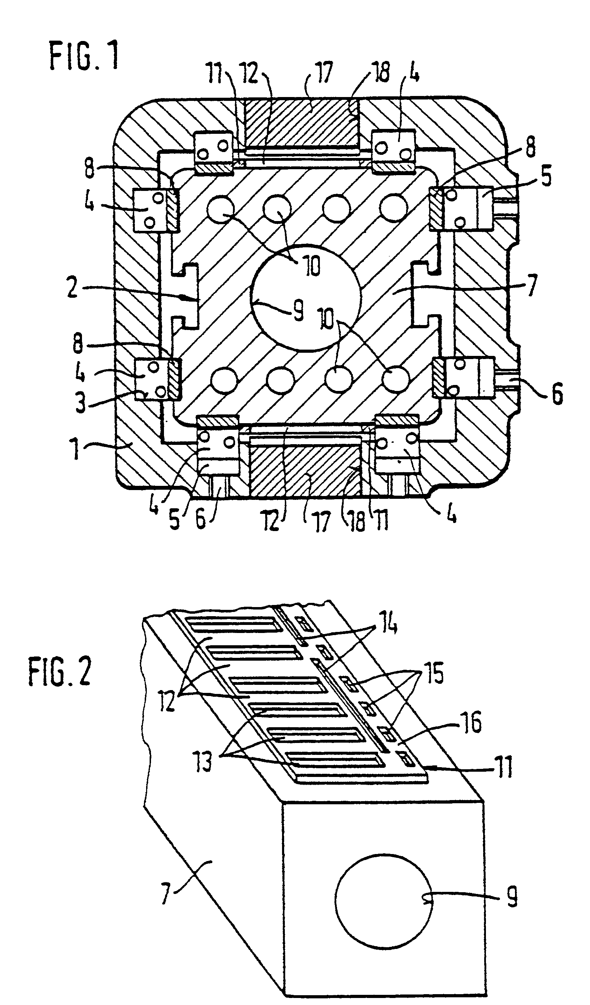

Die in den Figuren 1 bis 3 gezeigte Lineareinheit hat einen als Rohr ausgebildeten Halter 1, in welchem ein Werkzeugträger 2 längsverschiebbar gelagert ist. Das Rohr 1 hat viereckigen, vorzugsweise rechteckigen, Querschnitt und ist als Strangpreßkörper, vorzugsweise aus Aluminium oder einer Aluminiumlegierung, hergestellt. An der Innenseite des Rohres 1 sind parallel zueinander verlaufende Längsnuten 3 eingepreßt, in welche zur Längsführung des Werkzeugträgers 2 dienende Rollen- oder Kugellager 4 eingesetzt sind. Es sind mindestens zwei Lagereinrichtungen vorgesehen, die nahe der beiden Enden des Halters 1 angeordnet sind. Jede Lagereinrichtung besteht aus insgesamt acht Einzellagern 4, die paarweise über die vier Innenflächen des Halters 1 verteilt sind. Zwei dieser vier Lagerpaare stützen sich nach außen hin an je einer Druckplatte 5 ab, die mittels einer Schraube 6 zwecks Beseitigung von Lagerspiel einstellbar ist.

Der im Halter 1 längsverschiebbar geführte Werkzeugträger 2 besteht aus einem Profilkörper 7 mit annähernd quadratischem Querschnitt, der aus einem leichten Material, vorzugsweise aus Aluminium oder einer Aluminiumlegierung, besteht. Im Bereich der Lager 4 ist der Profilkörper 7 mit Bändern 8 aus einem harten, verschleißfesten Werkstoff, beispielsweise aus einer geeigneten Stahllegierung, besetzt. Der Körper 7 hat eine zentrale Öffnung 9 zur Durchführung oder zur Aufnahme eines nicht dargestellten, feststehenden Kolbens für den Schwerkraftausgleich. Außerdem sind mehrere Luftführungen 10 für die Zufuhr von Druckluft zu pneumatisch betriebenen Werkzeugen vorhanden.

Der Werkzeugträger 2 mit dem Körper 7, den Lagerbändern 8, der zentralen Kolbenführung 9 und den Luftführungen 10 ist im Verbundstrang-Preßverfahren gefertigt, wobei anstelle einer Aluminium-Stahl-Verbindung auch andere Metall- oder Kunststoffkombinationen verwendet werden können, sofern diese für das Verbundstrangpressen geeignet sind.

Zum Verschieben des Werkstückträgers 2 im Halter 1 dient ein elektromagnetisch betriebener Linearmotor, auf dessen bewegliches Element ein sich bewegendes Magnetfeld einwirkt. Im Prinzip besteht ein solcher Motor aus einer Zahnstange, die auf ihrer ganzen Länge in gleichen Abständen voneinander angeordnete Zähne aufweist. Gegenüber diesen Zähnen ist eine begrenzte Anzahl von Zahngruppen vorgesehen, die an magnetisierbaren Polschuhen eines Motorständers ausgebildet sind. Die Polschuhe unterliegen jeweils abwechselnd der Wirkung eines von einer eigenen Wicklung erzeugten Magnetfelds, das die Zahnstange zu einer Längsbewegung parallel zu der Ebene des Polspalts veranlaßt, so daß sich die zwischen den einander gegenüberliegenden Zähnen auftretende Reluktanz verringert, wenn bestimmte Wicklungen des Motorständers von einem Strom durchflossen werden.

Um die Lineareinheit möglichst kompakt zu machen und besondere Führungsmittel für die Zahnstange sowie Kraftübertragungsmittel zwischen der Stange und dem Werkzeugträger 2 einzusparen, ist der Werkzeugträger selbst als Zahnstange des Linearmotors ausgebildet. Hierzu ist im Ausführungsbeispiel nach den Figuren 1 bis 3 an zwei gegenüberliegenden Parallelflächen des Körpers 7 zwischen den Lagerbändern 8 je ein sich in Verschieberichtung des Körpers erstreckendes Band 11 aus magnetisch leitendem Material, vorzugsweise durch Kleben, befestigt. Das Band 11 weist Stege 12 auf, die durch Ausstanzen rechteckförmiger Öffnungen 13 im Band geschaffen wurden. Die Stege verlaufen senkrecht zur Bewegungsrichtung des Werkzeugträgers und haben gleichen Abstand voneinander. Sie bilden die Verzahnung des Linearmotors. Den Stegen und Öffnungen benachbart sind auf der einen Seite des Bandes 11 Längsschlitze 14 ausgebildet, die in Bewegungsrichtung des Werkzeugträgers hintereinander liegen. An diese Schlitze schließt sich eine weitere, aus Öffnungen 15 und Stegen 16 bestehende Verzahnung für einen im einzelnen nicht dargestellten elektromagnetischen Positionsmelder an. Die Schlitze 14 dienen zur magnetischen Abschirmung des Positionsmelders.

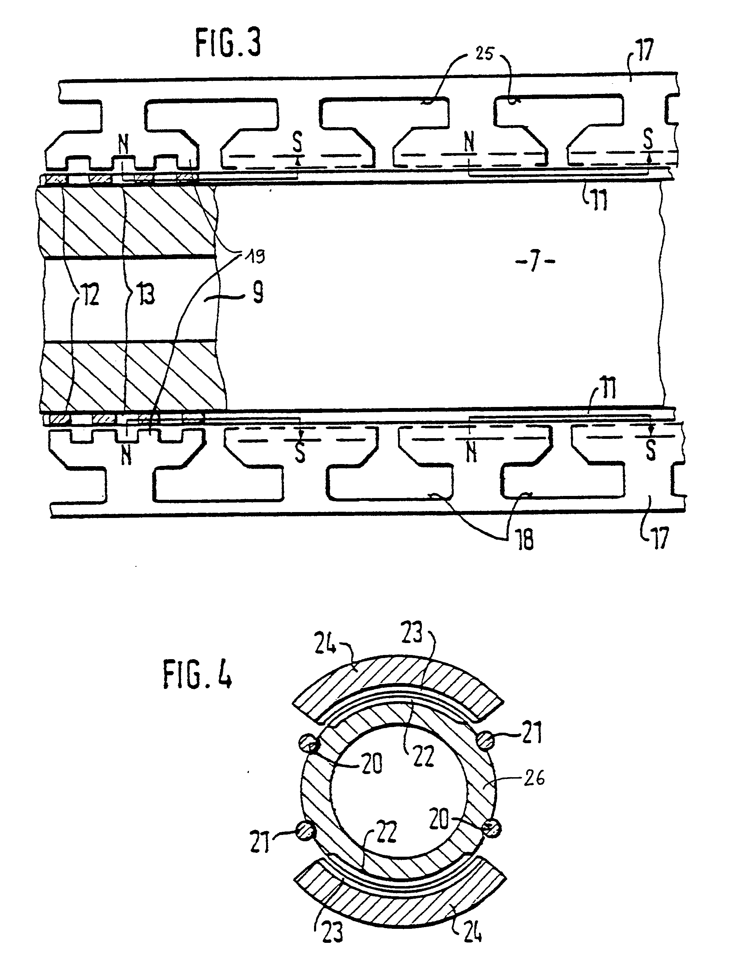

Die zugehörigen Motorständer 17 sind in je einen Durchbruch 18 des Halters 1 der Lineareinheit eingesetzt. Sie bestehen aus geschichteten Magnetblechen, in denen Aussparungen 25 zur Aufnahme nicht dargestellter Erregerwicklungen vorgesehen sind. An der dem Band 8 zugekehrten Fläche ist der Blechstapel mit Zähnen 19 versehen, welche parallel zu den Stegen 12 verlaufen und von diesen durch einen Polspalt getrennt sind. Die Erregerwicklungen jedes Motorständers sind so miteinander verschaltet, daß die vorhandenen Polstellen die aus Figur 3 ersichtliche Polung erhalten. Die magnetischen Flußstrecken verlaufen zwischen zwei benachbarten ungleichnamigen Polen in Richtung der eingezeichneten Pfeillinien durch das Band 11.

Beim Ausführungsbeispiel nach den Figuren 1 bis 3 sind zwei als Zahnstangen dienende Bänder 8 an gegenüberliegen den Planflächen des Körpers 7 angebracht. Bei Bedarf können um 90° versetzt zwei weitere Verzahnungen und Motorständer angebracht werden, um einen stärkeren Motor bei gleicher Baulänge zu erhalten.

Bei der Lineareinheit nach Figur 4 besteht der Werkzeugträger aus einem Rohr 26 mit zylindrischen Querschnitt. Das Rohr hat an seinem Außenumfang vier sich in Verschieberichtung erstreckende Führungsrillen zur Aufnahme von im Halter angeordneten Kugellagerelementen oder Führungsstangen 21. Zwischen je zwei auf gleicher Höhe liegenden Führungsrillen 20 ist am Außenumfang des Rohrs 26 eine Verzahnung 22 angebracht, deren Zähne quer zur Verschieberichtung des Rohres verlaufen und durch Fräsen oder Sägen gebildet sind.

Den Verzahnungen 22 steht je eine Verzahnung 23 gegenüber, die Bestandteil von im Halter es Werkzeugträgers 26 angeordneten Motorständern 24 ist. Zwischen den beiden Verzahnungen 22, 23 befindet sich ein Polspalt.

## Patentansprüche

1. Lineareinheit für Handhabungsgeräte der industriellen Fertigung mit einem Lagerflächen aufweisenden werkzeugträger, der in einem Halter(1) längsverschiebbar geführt ist sowie mit einem elektromagnetischen Linearantrieb, welcher eine mit dem Werkzeugträger (2) verbundene Zahnstange aus magnetisch leitendem Material als Motorläufer und einen magnetisierbaren Motoständer hat, wobei der Werkzeugträger (2;26) als Zahnstange des Linearmotors ausgebildet ist, dadurch gekennzeichnet, daß der Halter (1) in Verschieberichtung des Werkzeugträgers (2) und in Zuordnung zu jedem am Werkzeugträger (2) angeordneten Motorläufer (12, 13) einen Durchbruch (18) aufweist, in den der zugehörige Motorständer (17) eingesetzt ist.

2. Lineareinheit nach Anspruch 1, dadurch gekennzeichnet, daß die Verzahnung (12, 13 bzw. 22) zwischen den Lagerflächen (8 bzw. 20) des Werkzeugträgers (2 bzw. 26) angebracht ist.

3. Lineareinheit nach Anspruch 1 oder 2, dadurch gekennzeichnet, daß die Verzahnung (12, 13) als senkrecht zur Bewegungsrichtung des Werkzeugträgers (2) verlaufende Stege (12) in einem Band (11) aus magnetisch leitendem Material ausgebildet ist, welches am Außenumfang des Werkzeugträgers befestigt, vorzugsweise aufgeklebt, ist.

4. Lineareinheit nach Anspruch 1 oder 2, dadurch gekennzeichnet, daß die Verzahnung (22) durch Fräsen oder Sägen des Werkzeugträgers (26) in Querrichtung gebildet ist.

5. Lineareinheit nach einem der vorhergehenden Ansprüche, dadurch gekennzeichnet, daß der Werkzeugträger (2 bzw. 26) mehrere, über seinen Umfang verteilte Verzahnungen (12, 13 bzw. 22) hat, denen je ein im Halter (1) des Trägers untergebrachter Motorständer (17 bzw. 24) zugeordnet ist.

## Claims

1. Linear unit for industrial production handling devices with a tool carrier having bearing faces and being guided in a longitudinally displaceable manner in a support (1) and having an electromagnetic linear drive which has a toothed rack of magnetically conductive material connected to the tool carrier (2) as a motor rotor and a magnetisable motor stator, the tool carrier (2; 26) being constructed as a toothed rack of the linear motor, characterised in that the support (1) has, in the displacement direction of the tool carrier (2) and assigned to each motor rotor (12, 13) arranged on the tool carrier (2), a punch-through (18) into which the associated motor stator (17) is inserted.

2. Linear unit according to Claim 1, characterised in that the gearing (12, 13 and 22, respectively), is attached between the bearing faces (8 and 20, respectively) of the tool carrier (2 and 26, respectively).

3. Linear unit according to Claim 1 or 2, characterised in that the gearing (12, 13) is constructed as webs (12), running perpendicular to the direction of movement of the tool carrier (2), in a band (11) of magnetically conductive material which is attached, preferably bonded, to the outer circumference of the tool carrier.

4. Linear unit according to Claim 1 or 2, characterised in that the gearing (22) is formed by milling or sawing the tool carrier (26) in the transverse direction.

5. Linear unit according to one of the preceding claims, characterised in that the tool carrier (2 and 26, respectively) has a plurality of gearings (12, 13 and 22, respectively) distributed over its circumference, to which gearings in each case one motor stator (17 and 24, respectively) mounted in the support (1) of the carrier is assigned.

## Revendications

1. Unité linéaire pour appareils de manipulation en production industrielle, avec un porte-outil comportant des surfaces porteuses, porte-outil qui est guidé, de façon à pouvoir coulisser longitudinalement dans un support (1), ainsi qu'avec un entraînement linéaire électromagnétique, possédant une crémaillère liée au porte-outil (2), en matériau magnétique conducteur, servant d'induit de moteur, et un stator de moteur magnétisable, la crémaillère du moteur linéaire constituant le porte-outil (2, 26), unité linéaire caractérisée en ce que le support (1) comporte, dans la direction de déplacement du porte-outil (2) et en liaison avec chacun des induits de moteur (12, 13) placés sur le prote-outil (2), une interruption (18) par laquelle on introduit les stators de moteur (17) correspondants.

2. Unité linéaire conforme à la revendication 1, caractérisée en ce que l'engrenage (12, 13, ou 22) est disposé entre les surfaces porteuses (8 ou 20) du porte-outil (2 ou 26).

3. Unité linéaire conforme aux revendications 1 ou 2, caractérisée en ce que l'engrenage (12, 13) est constitué par des traverses (12) perpendiculaires à la direction de déplacement du porte-outil (2), pratiquées dans une bande (11) en un matériau magnétique conducteur, fixée à la périphérie du porte-outil, de préférence par collage.

4. Unité linéaire conforme aux revendications 1 ou 2, caractérisée en ce que l'engrenage (22) est réalisé par fraisage ou découpage du porte-outil (26) dans la direction transversale.

5. Unité linéaire conforme à l'une des revendications précédentes, caractérisée en ce que le prote-outil (respectivement 2 ou 26) possède sur sa périphérie des engrenages répartis (12, 13 ou 22), disposés chacun sur les stators de moteurs (17 ou 24) interrompus dans le support (1) du porte-outil (2).

FIG. 1

FIG. 2

**FIG.3**

**FIG.4**